# EUROPEAN PATENT SPECIFICATION

(11) **EP 2 569 217 B1**
(45) Date of publication and mention of the grant of the patent: **24.06.2015**
(21) Application number: 11724050.7
(22) Date of filing: 27.04.2011
(51) Int. Cl.: B65B 5/10, B65B 23/00, B65B 23/02, B65B 25/04, A01K 43/00

(54) **METHOD AND DEVICE FOR FILLING CONTAINERS**
VERFAHREN UND VORRICHTUNG ZUM BEFÜLLEN VON BEHÄLTERN
PROCÉDÉ ET DISPOSITIF POUR REMPLIR DES RÉCIPIENTS

(30) Priority: 10.05.2010 NL 2004696
(43) Date of publication of application: 20.03.2013
(73) Proprietor: Viscon B.V., 3295 KH 'S-Gravendeel (NL)
(72) Inventor: VISSER, Anthony, NL-3295 CT 'S-Gravendeel (NL)
(74) Representative: Grootscholten, Johannes A.M.
(86) International application number: PCT/NL2011/000034
(87) International publication number: WO 2011/142656

(56) References cited:
- DE-A1-102008 039 099
- US-A- 2 752 926
- US-A- 3 001 656
- US-A- 3 830 587
- US-A1- 2004 159 527

## Description

The present invention relates to a method, a device and a filling station in isolation, which in use forms a part of the device, for filling containers such as crates and (incubator) boxes with products, particularly but not exclusively products susceptible to breakage or damage or bruising, such as glass objects, vegetables such as tomatoes, fruit such as apples, eggs etc.

It is known for this purpose that a device, a filling station and a method according to prior art in general provide features as according to the preamble of the independent claims relating respectively to a device, a filling station and a method.

With a known device, filling station and method a number of eggs can for instance be picked up simultaneously by the feed, which can then be formed from a number of suction cups for picking up and placing eggs in the container, for instance an incubator box. The eggs are then preferably pre-sorted, although this is not a prerequisite for the present invention. The feed can be a (programmable) robot arm or fixed mechanical conveyor.

When picked-up products are placed in the container damage can occur if the products are placed with some force onto each other. Piling up can also occur in the container, i.e. smaller or larger accumulations of the products, when the products can roll (such as apples, tomatoes, eggs, glass objects), while the feed does not take this into account, or insufficiently so, when determining the location for placing of a subsequent product or a subsequent load of products into the container.

The present invention has for its object to obviate or at least considerably alleviate the problems or shortcomings of the known art, or at least bring about an improvement relative to the known art, for which purpose a device, a filling station and/or a method are distinguished from the known art by the features defined in the characterizing parts of the independent claims.

Products are distributed in surprising manner over the bottom of the container by generating an airflow, this even when round products roll over the bottom of the container and/or the feed stacks products on top of each other. Still more surprisingly it has been found that according to the invention breakage of or damage to the products can be almost wholly avoided. The airflow functions as cushion between the bottom of the container and the products to be placed thereon, but also between the products themselves. This makes the intention highly suitable for application with fragile, breakable or costly products, even when a fill factor to be achieved in a container is not important, or less important, during filling of the container with the products.

The present invention has diverse embodiments, to which the scope of protection for the invention is not limited, such as those defined by way of example in the dependent claims.

A device according to the invention further comprises for instance at least one gripper which, during operation of the fluid flow generator, acts on the container to hold the container stationary in the fluid flow at the setup position. Containers can thus be held in stationary position in the fluid flow so as to enable the products to be deposited therein with the feed, and the container can be prevented from displacing in the fluid flow. The gripper can also be formed such that a succession of containers can be moved along or through the setup position in a direction of movement, or be displaced in this direction and temporarily held still at the setup position in both the direction of movement and the direction of the fluid flow. After filling of the container with the products the gripper can be adapted to actively release the containers, or the containers can, after being filled, move further under a kind of stop and a subsequent container can be carried in the direction of forward movement to the setup position to be partially or wholly filled.

A device according to the invention can further comprise: a control acting during operation at least on the fluid flow generator for the purpose of adjusting the force of the fluid flow at the position of the container. The force of a generated fluid flow can thus be set to a desired level. The control is preferably adapted here to set the force of the fluid flow subject to a weight of the products to be placed in the container at the setup position. The fluid flow then acquires a force preferably lower than that at which damage could be caused to the products. Additionally or alternatively, the force of the fluid flow can be selected so as to cause the products to float at or just above the bottom of the container. This is therefore a lower value of the force of the fluid flow at which floating is only just realized. It is precisely this floating of the products in the fluid flow which is found to have a highly advantageous effect in achieving an optimum fill factor and/or limiting or even minimizing and/or eliminating breakage or damage, particularly in the case of eggs, apples, tomatoes or glass objects or similar products.

In order to enable effective movement of the fluid flow along the products and in particular between them, it is favourable in an embodiment of the invention that at least one opening is arranged in the setup position and the bottom of the container for passage of the fluid flow. An incubator box for eggs usually already has passages, so such an application is highly suitable for use in combination with the newly added measures according to the invention of the fluid flow generator in combination with the likewise new passages at the setup position.

In yet another embodiment a device according to the present invention can have the feature that the fluid flow is an airflow and the fluid flow generator is an airflow generator such as a fan. Although a water, gas or other flow is by no means precluded from the scope of the present invention, it is however noted that an airflow is highly suitable for application of the present invention, precisely because of the wide availability of air as source material for the fluid flow generator and because no provisions need be made to collect, recycle or otherwise have to or need to process source material that has been used.

Yet another embodiment of a device according to the invention can have the feature that the fluid flow generator is arranged under the setup position and is adapted to blow the fluid flow through the setup position. This is particularly advantageous when the feed delivers the products from above. An embodiment can nevertheless also be envisaged wherein the fluid flow generator is on the other hand arranged above the setup position and is adapted to suction up the fluid flow through the setup position.

The invention will be further elucidated hereinbelow on the basis of a limited number of exemplary embodiments thereof which, just as the dependent claims, should not be understood or interpreted as limiting the protection of the invention, wherein in the various views and exemplary embodiments the same reference numerals are applied for the same or similar parts, components and elements, and in which:
Fig. 1 shows a schematic and perspective view of a device according to the present invention, likewise embodying aspects of a method according to the present invention;
Fig. 2-5 show various stages in the placing of products in a container;
Fig. 6, 7 show perspective and top views of a final result of the stages shown in figures 2-5 of filling a container with the products.

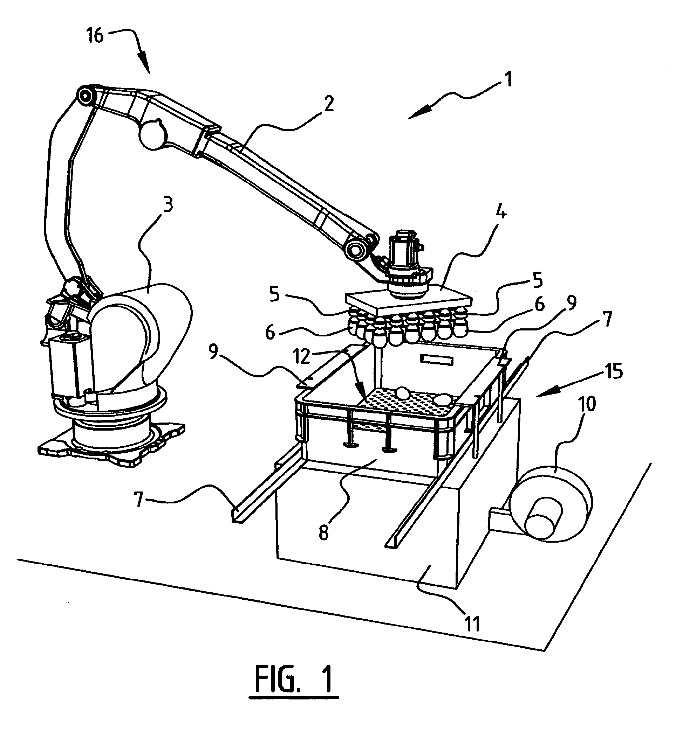

Figure 1 shows a perspective and schematic view of a device 1 for filling one container at a time in the form of an incubator box 8 with products in the form of eggs 6, on a bottom 12 thereof.

Device 1 comprises a filling station 11 with a setup position 15 for placing of box 8 with the bottom 12 thereof on setup position 15.

The device further comprises a feed 16 which during operation feeds at least one of the products at a time to setup position 15 and is adapted to place the at least one of the products into container 8. The feed comprises a robot with a gripper arm 2 on a housing 3. Provided in housing 3 (or elsewhere) is a vacuum pump (not shown) from which a conduit (not shown) runs to a platform 4 on the free outer end of gripper arm 2. Arranged on platform 4 are suction cups 5 which, using underpressure generated with the vacuum pump (not shown), are each able to pick up, displace and place an egg 6 in box 8. All that is necessary for such placing is that the underpressure be relieved when eggs 6 have reached the destination thereof at the bottom 12 of box 8. Arm 2 makes for this purpose a reciprocating movement between a source of eggs (not shown) and setup position 15.

Box 8 is supplied to setup position 15 over guides 7 or rails. A succession of boxes 8 can thus be carried along or over setup position 15 and temporarily held still at the setup position so as to be filled with eggs. Filling Station 11 at setup position 15 comprises a hollow housing on which a fan 10 is arranged, which fan forms the fluid flow generator, in particular an airflow generator.

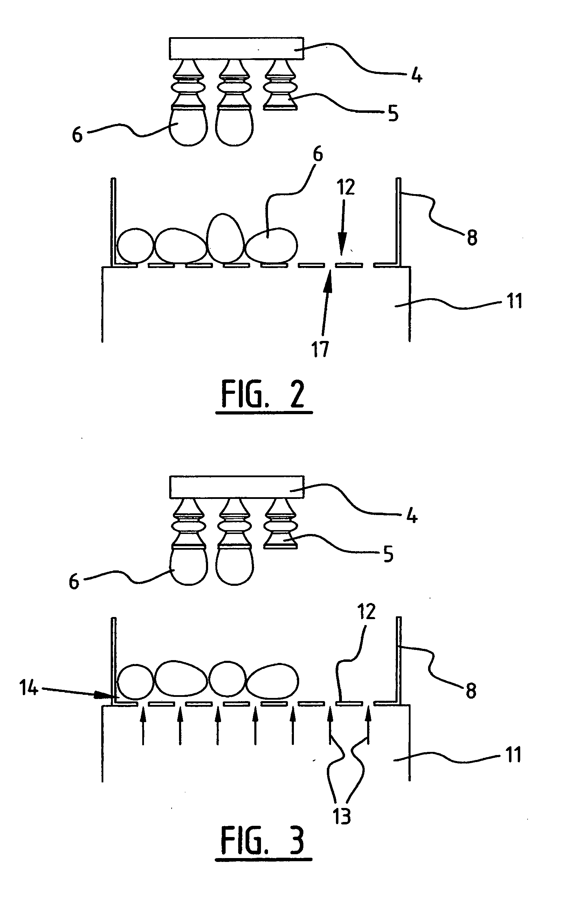

Housing 11 is open at the top as shown in figures 2-5, and box 8 comprises passages 17 to allow an airflow 13 generated by fan 10 during operation to flow through the open top side of housing 11 and through passages 17.

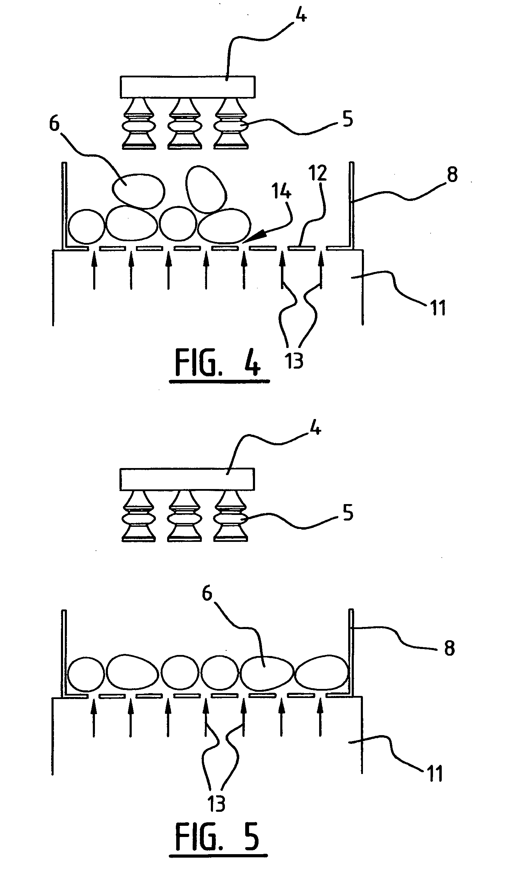

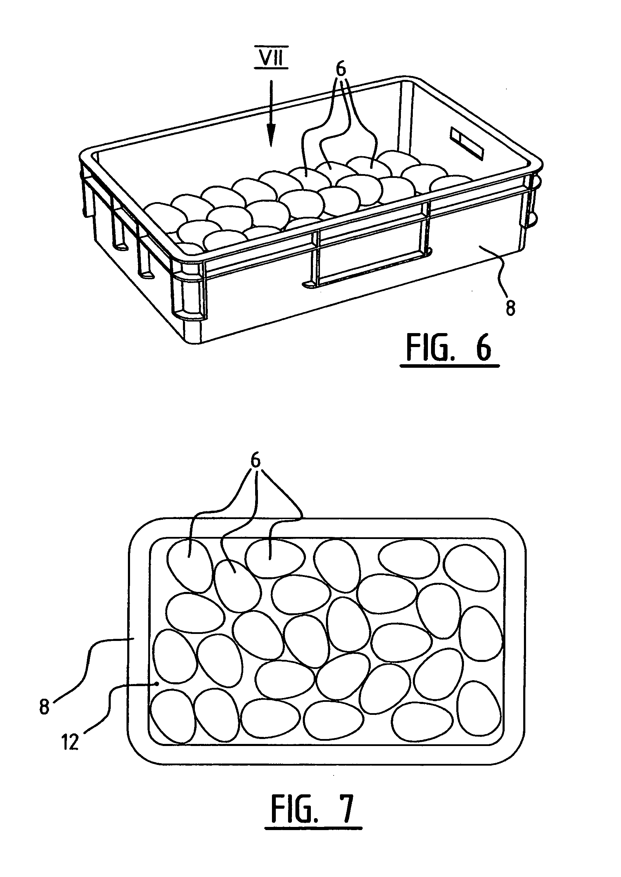

When fan 10 is in operation (figure 3) the airflow 13 is activated, wherein eggs 6 already lying on the bottom of box 8 begin to float a short distance 14 above bottom 12 of box 8. Eggs set down by the gripper arm are taken up in airflow 13. This of course depends on the weight of eggs 6 in combination with the force of the generated airflow 13. From suction cups 5 on platform 4 of gripper arm 2 eggs 6 are then set down (figure 4) a short distance above bottom 12 of box 8 and taken up in airflow 13, and gripper arm 2 moves away (fig. 4 - fig. 5). As a result of the force of airflow 13, which is in opposite direction to the eggs 6 set down above it, the eggs 6 set down on the bottom of the box are all distributed optimally over the bottom 12 of box 8 so as to bring about an optimal fill factor of box 8 as shown in figures 6 and 7, and breakage of or damage to eggs 6 is also reduced, if not countered or even wholly avoided. Nor do the eggs collide with each other, or hardly so, precisely because of the airflow 13 flowing between them.

After examination of the description in the foregoing and in conjunction with the drawings, many alternative and additional embodiments and examples will occur to the skilled person, all of which must be deemed as lying within the scope of protection defined by the claims, unless such variants depart essentially in letter or spirit from the definitions of the invention in these claims. It is thus possible within the scope of the present invention that containers are filled with products other than eggs (such as glasses or other possibly fragile objects), that the products can be placed one by one into the containers and that a feed other than a gripper arm with suction cups can be applied for the purpose of placing the products in the container. The airflow required to protect the products from each other and the container can also be realized from above on the basis of suction, although it will then be necessary to take more account of relative positioning of the feed and the fluid flow generator if the feed also operates on or at the top side of the container. In another or the shown and described embodiment an aligning effect can also be realized, according to which the eggs can come to lie with a longitudinal axis upward in the container (eggs are oval or at least elongate). This would result in an optimum fill factor. Alternatively, the eggs can come to lie with the longitudinal axis thereof flat in the container. Additionally or alternatively, a single fan or air pump can be applied to provide vacuum to the suction cups on the gripper arm and to generate the airflow through the bottom of the container. The fluid flow can also comprise a water flow, a gas flow or the like. The robot arm shown in the figures is only an example, and a mechanical conveyor can be applied instead.

## Claims

1. Device for filling a container (8) at a time, such as a crate or an incubator box on a bottom thereof with products, for instance glass objects or fruit such as apples, or vegetables such as tomatoes, or eggs, comprising:
- a filling station (11) with a setup position for placing the container with the bottom thereof;
- a feed (16) which during operation feeds at least one of the products at a time to the setup position and is adapted to place the at least one of the products in the container; and **characterized by**
- a fluid flow generator (10) adapted to generate a fluid flow during operation through the bottom of the container at the setup position.

2. Device as claimed in claim 1, further comprising at least one gripper (2) which, during operation of the fluid flow generator, acts on the container to hold the container stationary in the fluid flow at the setup position.

3. Device as claimed in claim 1 or 2, further comprising a control acting during operation at least on the fluid flow generator (10) for the purpose of adjusting the force of the fluid flow at the position of the container.

4. Device as claimed in claim 3, wherein the control is adapted to set the force of the fluid flow subject to a weight of the products to be placed in the container at the setup position.

5. Device as claimed in claim 4, wherein the force of the fluid flow can be selected so as to cause the products to float at or just above the bottom of the container.

6. Device as claimed in at least one of the foregoing claims, wherein at least one opening is arranged in the setup position and the bottom of the container for passage of the fluid flow.

7. Device as claimed in at least one of the foregoing claims, wherein the fluid flow is an airflow and the fluid flow generator (10) is an airflow generator such as a fan.

8. Device as claimed in at least one of the foregoing claims, wherein the fluid flow generator (10) is arranged under the setup position and is adapted to blow the fluid flow through the setup position.

9. Device as claimed in at least one of the foregoing claims 1-7, wherein the fluid flow generator (10) is arranged above the setup position and is adapted to suction up the fluid flow through the setup position.

10. Method for filling a container at a time, such as a crate or an incubator box on a bottom thereof with products such as glass objects or eggs, comprising of:
- placing the container with the bottom at a setup position;
- feeding at least one of the products at a time to the setup position and placing the at least one of the products in the container; and
**characterized by**
- generating a fluid flow through the bottom of the container.

11. Method as claimed in claim 10, further comprising of gripping the container at the setup position during generation of the fluid flow.

12. Method as claimed in claim 10 or 11, further comprising of adjusting the force of the fluid flow subject to a weight of the products to be placed in the container at the setup position.

13. Method as claimed in claim 12, comprising of setting the force of the fluid flow so as to cause the products to float at or just above the bottom of the container.

14. A combination of
- a filling station (11) for filling a container at a time, such as a crate or an incubator box on a bottom thereof with products, for instance glass objects or fruit such as apples, or vegetables such as tomatoes, or eggs, having a setup position for placing the container with the bottom thereof, wherein the filling station is at least in use combined with a feed which during operation feeds at least one of the products at a time to the setup position and is adapted to place the at least one of the products in the container, and
- a fluid flow generator (10) arranged underneath the set-up position and adapted to generate a fluid flow during operation through the bottom of the container at the setup position of the filling station.

## Patentansprüche

1. Vorrichtung zum Befüllen eines Behälters (8) zu einer Zeit, wie etwa einer Kiste oder eines Inkubators mit Produkten auf einem Boden davon, zum Beispiel Glasgegenständen oder Früchten, wie etwa Äpfeln, oder Gemüsen, wie etwa Tomaten, oder Eiern, die Folgendes umfasst:
- eine Befüllungsstation (11) mit einer Einrichtungsposition zum Anordnen des Behälters mit dessen Boden;
- eine Zufuhr (16), die während des Betriebs mindestens eines der Produkte zu einer Zeit der Einrichtungsposition zuführt und angepasst ist, das mindestens eine der Produkte in dem Behälter zu platzieren; und
**gekennzeichnet durch**
- einen Fluidstromgenerator (10), der angepasst ist zum Erzeugen eines Fluidstroms während des Betriebs **durch** den Boden des Behälters an der Einrichtungsposition.

2. Vorrichtung gemäß Anspruch 1, die weiter mindestens einen Greifer (2) umfasst, der während des Betriebs des Fluidstromgenerators auf den Behälter einwirkt, um den Behälter stationär in dem Fluidstrom an der Einrichtungsposition zu halten.

3. Vorrichtung gemäß Anspruch 1 oder 2, die weiter eine Steuerung umfasst, die während des Betriebs mindestens auf den Fluidstromgenerator (10) einwirkt zum Zwecke der Einstellung der Kraft des Fluidstroms an der Position des Behälters.

4. Vorrichtung gemäß Anspruch 3, bei der die Steuerung eingerichtet ist, die Kraft des Fluidstroms in Abhängigkeit von einem Gewicht der Produkte einzustellen, die in dem Behälter an der Einrichtungsposition anzuordnen sind.

5. Vorrichtung gemäß Anspruch 4, wobei die Kraft des Fluidstroms so gewählt werden kann, dass sie bewirkt, dass die Produkte an oder gerade über dem Boden des Behälters schweben.

6. Vorrichtung gemäß einem der vorhergehenden Ansprüche, wobei mindestens eine Öffnung in der Einrichtungsposition und dem Boden des Behälters zum Durchtritt des Fluidstroms angeordnet ist.

7. Vorrichtung gemäß mindestens einem der vorhergehenden Ansprüche, wobei der Fluidstrom ein Luftstrom ist und der Fluidstromgenerator (10) ein Luftstromgenerator, wie etwa ein Gebläse, ist.

8. Vorrichtung gemäß mindestens einem der vorhergehenden Ansprüche, wobei der Fluidstromgenerator (10) unter der Einrichtungsposition angeordnet ist und angepasst ist, den Fluidstrom durch die Einrichtungsposition zu blasen.

9. Vorrichtung gemäß mindestens einem der vorhergehenden Ansprüche 1-7, wobei der Fluidstromgenerator (10) über der Einrichtungsposition angeordnet ist und eingerichtet ist, den Fluidstrom durch die Einrichtungsposition einzusaugen.

10. Verfahren zum Befüllen eines Behälters zu einer Zeit, wie etwa einer Kiste oder eines Inkubators, auf einem Boden davon mit Produkten, wie etwa Glasgegenständen oder Eiern, das Folgendes umfasst:
- Anordnen des Behälters mit dem Boden an einer Einrichtungsposition;
- Zuführen mindestens eines der Produkte zu einer Zeit zu der Einrichtungsposition und Platzieren des mindestens einen der Produkte in dem Behälter; und
**gekennzeichnet durch**
- Erzeugen eines Fluidstroms **durch** den Boden des Behälters.

11. Verfahren gemäß Anspruch 10, das weiter Greifen des Behälters an der Einrichtungsposition während des Erzeugens des Fluidstroms umfasst.

12. Verfahren gemäß Anspruch 10 oder 11, das weiter Einstellen der Kraft des Fluidstroms in Abhängigkeit von einem Gewicht, der in dem Behälter an der Einrichtungsposition zu platzierende Produkte umfasst.

13. Verfahren gemäß Anspruch 12, das das Einstellen der Kraft des Fluidstroms umfasst, sodass Schweben der Produkte an oder gerade über dem Boden des Behälters bewirkt wird.

14. Eine Kombination von
- einer Befüllungsstation (11) zum Befüllen eines Behälters zu einer Zeit, wie etwa einer Kiste oder eines Inkubators, auf einem Boden davon mit Produkten, zum Beispiel Glasgegenständen oder Früchten, wie etwa Äpfeln, oder Gemüsen, wie etwa Tomaten, oder Eiern, die eine Einrichtungsposition zum Anordnen des Behälters mit dem Boden davon aufweist, wobei die Befüllungsstation mindestens in Benutzung kombiniert mit einer Zufuhr ist, die während des Betriebs mindestens eines der Produkte zu einer Zeit der Einrichtungsposition zuführt und eingerichtet ist, das mindestens eine der Produkte in dem Behälter zu platzieren, und
- einem Fluidstromgenerator (10), der unter der Einrichtungsposition angeordnet ist und angepasst ist zum Erzeugen eines Fluidstroms während des Betriebs durch den Boden des Behälters an der Einrichtungsposition der Befüllungsstation.

## Revendications

1. Dispositif destiné à remplir un contenant (8) à la fois, tel qu'une caisse à claire-voie ou une boîte d'incubation, sur le fond duquel sont placés des produits, par exemple des objets en verre ou des fruits tels que des pommes, ou des légumes tels que des tomates, ou des oeufs, comprenant :
- un poste de remplissage (11) avec une position de préparation, destiné à placer le contenant avec le fond de celui-ci ;
- un dispositif d'approvisionnement (16) qui, en service, approvisionne la position de préparation en l'un au moins des produits à la fois à et qui est adapté de façon à placer le ou les produits dans le contenant ; et
**caractérisé par** :
- un générateur de flux de fluide (10) adapté de façon à générer en service un flux de fluide à travers le fond du contenant au niveau de la position de préparation.

2. Dispositif selon la revendication 1, comprenant en outre au moins un dispositif de préhension (2) qui, lors du fonctionnement du générateur de flux de fluide, agit sur le contenant de façon à maintenir le contenant fixe dans le flux de fluide au niveau de la position de préparation.

3. Dispositif selon la revendication 1 ou la revendication 2, comprenant en outre une commande qui agit en service au moins sur le générateur de flux de fluide (10) dans le dessein de régler la force du flux de fluide au niveau de la position du contenant.

4. Dispositif selon la revendication 3, dans lequel la commande est adaptée de façon à régler la force du flux de fluide soumis au poids des produits à placer dans le contenant au niveau de la position de préparation.

5. Dispositif selon la revendication 4, dans lequel la force du flux de fluide peut être sélectionnée de façon à faire flotter les produits au niveau, ou juste au-dessus, du fond du contenant.

6. Dispositif selon l'une quelconque des revendications précédentes, dans lequel une ouverture au moins est agencée dans la position de préparation et dans le fond du contenant pour le passage du flux de fluide.

7. Dispositif selon l'une quelconque des revendications précédentes, dans lequel le flux de fluide est un flux d'air et le générateur de flux de fluide (10) est un générateur de flux d'air tel qu'un ventilateur.

8. Dispositif selon l'une quelconque des revendications précédentes, dans lequel le générateur de flux de fluide (10) est agencé sous la position de préparation et est adapté de façon à souffler le fluide à travers la position de préparation.

9. Dispositif selon l'une quelconque des revendications précédentes 1 à 7, dans lequel le générateur de flux de fluide (10) est agencé au-dessus de la position de préparation et est adapté de façon à aspirer le fluide à travers la position de préparation.

10. Procédé destiné à remplir contenant à la fois, tel qu'une caisse à claire-voie ou une boîte d'incubation, sur le fond duquel sont placés des produits tels que des objets en verre ou des oeufs, comprenant les étapes consistant à :
- placer le contenant avec le fond de celui-ci au niveau d'une position de préparation ;
- approvisionner la position de préparation en l'un au moins des produits à la fois et placer le ou les produits dans le contenant ; et
**caractérisé par** une étape consistant à :
- générer un flux de fluide à travers le fond du contenant.

11. Procédé selon la revendication 10, comprenant en outre en outre une étape consistant à saisir le contenant au niveau de la position de préparation au cours de la génération du flux de fluide.

12. Procédé selon la revendication 10 ou la revendication 11, comprenant en outre une étape consistant à régler la force du flux de fluide soumis au poids des produits à placer dans le contenant au niveau de la position de préparation.

13. Procédé selon la revendication 12, comprenant en outre une étape consistant à régler la force du flux de fluide de façon à faire flotter les produits au niveau, ou juste au-dessus, du fond du contenant.

14. Association :
- d'un poste de remplissage (11) destiné à remplir un contenant à la fois, tel qu'une caisse à claire-voie ou une boîte d'incubation, sur le fond duquel sont placés des produits, par exemple des objets en verre ou des fruits tels que des pommes, ou des légumes tels que des tomates, ou des oeufs, présentant une position de préparation, destiné à placer le contenant avec le fond de celui-ci, dans lequel le poste de remplissage est associé, en service au moins, à un dispositif d'approvisionnement qui, en service, approvisionne la position d'installation en l'un au moins des produits à la fois et qui est adapté de façon à placer le ou les produits dans le contenant ; et
- d'un générateur de flux de fluide (10) agencé sous la position de préparation et adapté de façon à générer un flux de fluide en service à travers le fond du contenant au niveau de la position de préparation du poste de remplissage.
